# EUROPEAN PATENT APPLICATION

(11) **EP 1 729 293 A2**
(43) Date of publication of application: **06.12.2006**
(21) Application number: 06010502.0
(22) Date of filing: 22.05.2006
(51) Int. Cl.: G11B 7/007, G11B 7/24

(54) **Optical disc medium and optical disc device**

(30) Priority: 31.05.2005 JP 2005159073
(71) Applicant: NEC Corporation, Minato-ku Tokyo (JP)
(72) Inventor: Yamanaka, Yutaka, Tokyo (JP)
(74) Representative: Vossius & Partner

(57) **Abstract**

Areas, which are located on the inner peripheral sides of multi-layered information recording areas (20) and have the same radial ranges, are set as burst cutting area forming zones, and a burst cutting area (BCA) (101) is formed in one information recording layer. All of the same radial ranges of the other information recording layers are formed as mirror surfaces (5). Thereby, interference from other layers and scattering of readout light are prevented, so reading of the burst cutting area (BCA) is realized stably.

## Description

The present invention relates to an optical disc medium and an optical disc device, and in particular, to an optical disc medium and an optical disc device including an arrangement of a burst cutting area (BCA) relating to identification information and the like of the optical disc medium and detecting and reading techniques thereof.

In the field of optical disc in which reading and writing of information is performed with a minute condensing spot, ROM (Read Only Memory) media for reading only in which embossed pit rows have been formed in advance, and CD-R (Compact Disc-Recordable) and DVD-R (Digital Versatile Disc-Recordable), which are optical discs capable of recording data only once, are widely used (see International Patent Publication No. WO2002/037483).

Further in recent years, optical discs such as DVD-RW (Digital Versatile Disc-Rewritable) in which rewriting is possible have been used. These optical discs have such a configuration that a condensing spot is formed in an information recording layer via a transparent substrate so as to perform reading and writing of information. In the information recording layer, pit rows or grooves are formed along a spiral record track.

Further, in such an optical disc, there is a case where an area called a burst cutting area (BCA) is formed as an area for writing information readable by a condensing spot of an optical disc device other than the spiral record track. The burst cutting area (BCA) is formed by arranging line segments extending in a radial direction at predetermined intervals on the circumference in a low reflectance mode, and the pattern thereof is determined depending on the content of the information to be written. It has such a structure that barcodes, generally used, are arranged circumferentially.

Fig. 5A shows a part of the burst cutting area (BCA) 101 by enlarging it, in which a plurality of line segments 101a of low reflectance are aligned in a same circumference in a radial position range defined on the optical disc 100, having the uniform length in the radial direction, so as to form a predetermined pattern on the same circumference. The area in which the BCA 101 is formed does not include a track that the condensing spot should follow, so in an optical disc device, a condensing spot e scans on the BCA 101 in a circumferential direction as shown by the arrow S along the rotation of the disc 100 in a state where only focus servo is applied. At this time, a signal E corresponding to the fluctuation of the amount of reflected light described in the lower part of Fig. 5A is obtained. Based on the signal E, it is adapted that information according to the BCA 101 written on the disc medium 100 is read.

An example of such a BCA 101 is described in the ECMA (European Computer Manufacturer Association) standardization material (ECMA-267; 120mm, DVD-Read-Only Disc).

Compared with the case of writing information by using pits, an advantage of writing information by using a BCA is it is possible to perform by each optical disc separately after the optical disc is manufactured. For example, a serial number for managing the copyright can be placed on an optical disc. In such a case, as a means for forming a BCA, in a read-only optical disc, that is, ROM, for example, there is one in which a metal reflection film formed in an information recording layer is removed by strong laser irradiation to thereby create a low reflectance part.

However, in such a method (a method of forming after manufacturing the optical disc), a pattern distance becomes significantly larger compared with that of pits. For example, for the width of the low reflectance part 101a, about 10µm is a practical value, and the widest pattern distance is 100µm or more.

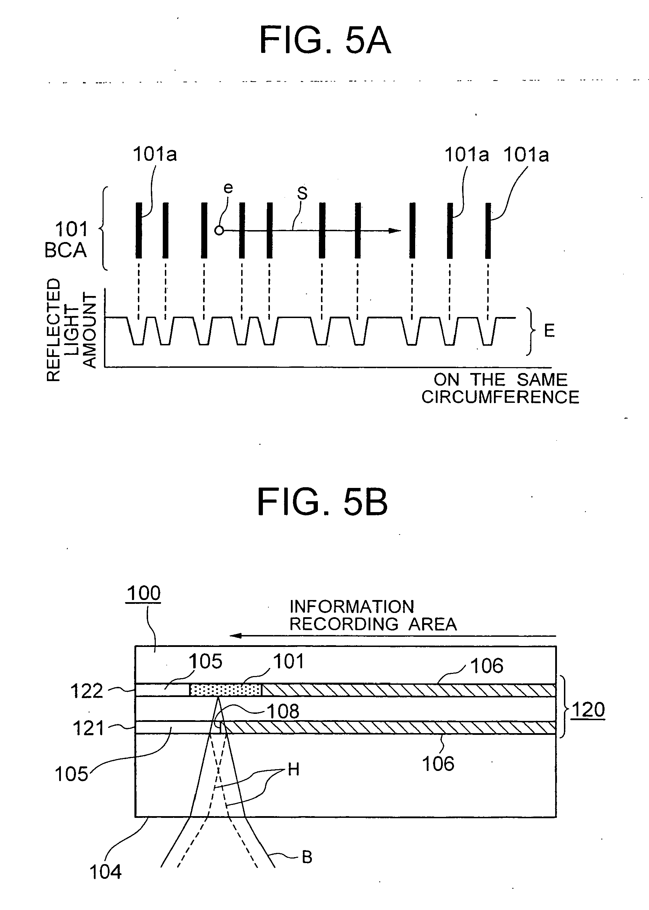

Recently, an optical disc having a plurality of information recording layers, that is, two or more layers, to which reading and writing can be performed from one light incident surface is widely used practically. Fig. 5B shows a cross-section of an exemplary optical disc having two information recording layers. In the optical disc 100 shown in Fig. 5B, two information recording layers 120, that is, a 0^{th} information recording layers 121 and a 1^{st} information recording layers, are formed which are read by a condensed beam B from the light incident surface 104.

The distance between the information recording layers 121 and 122 is desirably in a range in which astigmatism of the condensed beam transmitting a transparent substrate, which is the material of the optical disc 100, does not largely fluctuate. Therefore, in a DVD-ROM for example, it is set to about 50µm. At this time, the diameter of the condensed beam in the 0^{th} information recording layer 121, when a condensing spot is formed in the 1^{st} information recording layer 122 for example, is about 40µm. This is a size of same order of the pattern of the BCA 101 described above.

Accordingly, when BCA are formed in the both information recording layers 121 and 122, if a condensing spot is formed in one information recording layer, fluctuation of the condensed beam by the BCA pattern of the other information recording layer comes to a level which cannot be disregarded. In order to prevent it, the BCA must be formed in either one of the layers.

However, in the case of forming a BCA in only one layer, the following problem will be caused. That is, in a DVD-ROM for example, an information recording area of an information recording layer is usually a pit recording surface 106 as shown in Fig. 5B, so when forming the BCA 101, the BCA 101 is formed in a redial area in front and back of the innermost peripheral edge of the information recording area of the 1^{st} information recording layer 122. In such a case, in the 0^{th} information recording layer 121 on the radial area side where the BCA is located, the pit recording surface 106 and the mirror surface 105 in which nothing is formed are mixed.

As for the pit recording surface 106 and the mirror surface 105, the amounts of reflected light and the amounts of transmitted light thereof are different from each other. Therefore, if the condensed beam B comes to the interface position of the two kinds of surfaces (the pit recording surface 106 and the mirror surface 105) shown by the continuous line in Fig. 5B for example, readout signals may be deteriorated due to unevenness within the condensed beam.

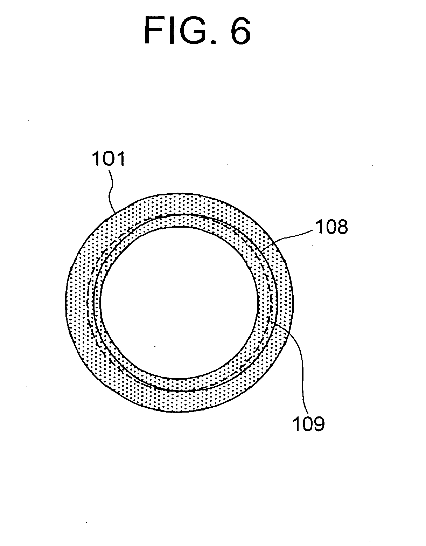

Further, as shown in Fig. 6, if the optical disc 100 is manufactured in an eccentric state where the center points of the 0^{th} information recording layer 121 and the 1^{st} information recording layer 122 are not aligned, there is a positional relationship in which the condensing spot scanning position 109 is coming in and out in revolution with respect to the interface position 108 at a radial position overlapping the BCA 101 of the 1^{st} information recording layer 122, whereby readout signals may be deteriorated due to the difference of surface conditions of the inner peripheral side and the outer peripheral side of the interface position 108.

In order to prevent such a problem, the pit recording surface 106 of the 0^{th} information recording layer may be formed to be enlarged up to the inner peripheral radius where the BCA 101 is formed. However, in such a state, a problem of reflected light H (crosstalk) being generated from the adjacent layer is caused as shown by the broken line in Fig. 5B, so the amount thereof must be suppressed.

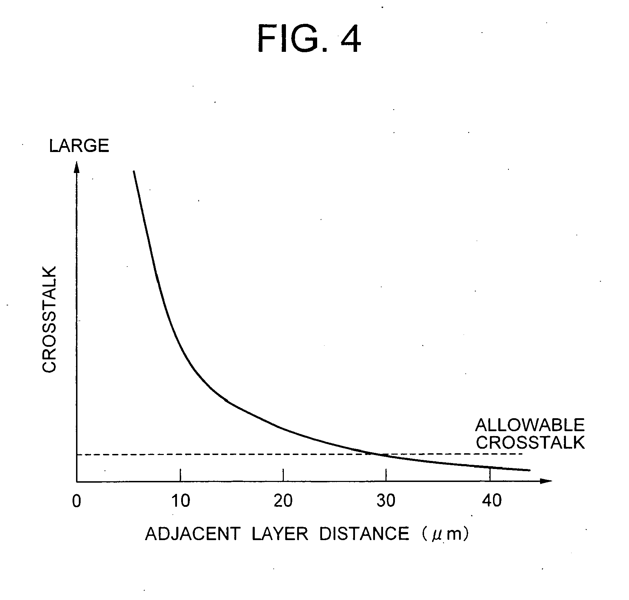

Fig. 4 shows an experimental result of analyzing generation of reflected light H (crosstalk) from the adjacent layer in the conventional example. This experimentation was for checking the layer distance dependency of the reflected light H (crosstalk), and calculating the layer distance dependency of the proportion of the reflected light (crosstalk) from the adjacent layer where NA of the condensed beam is "0.65" and the equivalent light receiving area is 100µm². In an optical disc device, an optical head which reads signals receives light by a photodetector by enlarging and imaging reflected light from a condensing spot, and assuming that the enlargement ratio is M and the light receiving area of the photodetector is A, A/M² in which the light receiving area calculated at the condensing spot is the equivalent light receiving area. Here, if the equivalent light receiving area is 100µm², it is a typical value of an optical head, but the stroke increases as the area becomes larger.

Now, it is obvious from Fig. 4 that when the crosstalk from the adjacent layer is set to about 5% which can be disregarded with respect to generation of signals, if the broken line (crosstalk) in Fig. 5B is not more than 5%, it is an allowable crosstalk amount. If the adjacent layer distance becomes not more than 30µm, it is found that it exceeds the allowable crosstalk amount. For example, in a DVD-ROM, the adjacent layer distance is set to not less than 40µm, so there is no problem. However, if the light source wavelength is changed from a red color band (about 650nm) of the DVD-ROM to a shorter blue color band (about 400nm), the allowable astigmatism of the condensed beam when transmitting a transparent substrate becomes small, so the layer distance must be set to not less than 30µm. The crosstalk cannot be disregarded in such a small layer distance, so if a structure such as pits or grooves is formed in the adjacent layer, noises may be caused when readout. Therefore, in a general pit recording surface, there is caused a disadvantage that it is impossible to add error correction codes of the sufficient amount to record signals by considering the noise amount.

It is therefore an object of the present invention to provide an optical disc medium and an optical disc device capable of improving the disadvantage of the conventional example, and in particular, effectively achieving reading of a burst cutting area (BCA) while effectively excluding interference by other layers (particularly, crosstalk) or scattering of readout light, whereby effectively achieving information management based on the optical disc medium.

In order to achieve the object mentioned above, an optical disc medium according to the present invention includes a plurality of information recording layers accessible from the same light incident surface, in which each layer has a predetermined information recording area. An area which is on the inner peripheral side of the information recording area and has a predetermined same radial range in each layer is a burst cutting area forming zone. A burst cutting area (BCA) is provided in the burst cutting area forming zone of one information recording layer among a plurality of information recording layers (which may be set near the innermost peripheral edge), and burst cutting area forming zones in the remaining information recording layers are formed as mirror surfaces.

With this configuration, identification of a position can be performed quickly with high accuracy without depending on track servo. Further, in the mirror surfaces, no fluctuation is caused in a condensed beam passing through them or being reflected partially. Therefore, interference by the remaining (other) information recording layers will not be caused, so it is possible to read signals in the burst cutting area (BCA) in a stable state at any time.

The burst cutting area (BCA) may be set with a predetermined distance from the information recording area located on the outer peripheral side thereof. With this configuration, interference by an information recording layer is reduced. In particular, in a disc medium having a plurality of layers, even there is eccentric in the respective layers, the influence is avoidable, whereby it is possible to read signals on the burst cutting area stably.

As for the burst cutting area (BCA), it may be provided in an information recording layer which is the farthest from the same light incident surface, among the plurality of information recording layers. Even with this configuration, it is possible to read BCA signals stably same as the case described above. Further, there is an advantage that information reading from each information recording layer is performed smoothly.

Further, in the burst cutting area forming zone in which the burst cutting area is provided, all parts other than a part where the burst cutting area is provided may be formed as mirror surfaces. Even with this configuration, it is possible to read BCA signals stably same as the case described above.

Information written with a plurality of line segments of low reflectance which are constitutional elements of the burst cutting area may be set by changing spaces between the line segments of low reflectance.

Further, the length of the plurality of line segments of low reflectance which are constitutional elements of the burst cutting area may be set to a length capable of allowing an eccentric amount of a track of each information recording layer. With this configuration, even if the burst cutting area (BCA) is provided eccentrically, BCA signals can be read stably without depending on track servo, whereby reliability of the disc medium is also increased. The layer distance of the information recording layers of the optical disc medium according to the present invention may be not more than 30µm. Even with this configuration, it is possible to obtain an optical disc medium in which mirror surfaces work effectively and operational effects that the above-described respective inventions have can be carried out more securely.

Further, an optical disc device according to the present invention includes: an optical head, into which the optical disc medium described above is loaded, for reading predetermined data from the optical disc medium; and a main controller for controlling the operation of the optical head, and is configured to read and output information from the optical head. The main controller includes: a mirror surface detecting function which is operated when focusing is performed to a radial area of the burst cutting area of the optical disc medium or when movement to the burst cutting area is performed after focusing has been performed to another area of the information recording layer, and which detects that the information recording layer after focusing has been performed is a mirror surface; and an interlayer jump controlling function which is operated when a detection result is not a mirror surface and which urges an interlayer jump operation to another information recording layer.

The optical disc device may,be embodied as described below. That is, an optical disc device according to the present invention includes: an optical head, into which the optical disc medium described above is loaded, for reading predetermined data from the optical disc medium; a data reading circuit for reading and outputting data outputted from the optical head; and a main controller for drive-controlling the data reading circuit. The optical head has an interlayer jump drive circuit for jump-moving a condensing spot of the optical head from one information recording layer of the optical disc medium to another information recording layer. Further, the main controller is so configured to include: a recording layer determining function which is operated based on reflected light data inputted in the data reading circuit and which determines whether the optical head selects an information recording layer having a burst cutting area; and an interlayer jump controlling function which is operated based on a negative determination by the recording layer determining function and which causes the optical head to jump to another recording layer via the interlayer jump driving circuit. The recording layer determining function of the main controller may be a mirror surface detecting function which is operated when focusing is performed to a radial area of the burst cutting area corresponding to an outside instruction of the optical head or when movement to the burst cutting area is performed after focusing has been performed to another area of the information recording layer, and which determines whether detected data from the optical head is reflected data from the mirror surface.

With this configuration, it is possible to securely obtain determination signals from reflected information from mirror surfaces, and by using them, it is possible to perform reading from the burst cutting area (BCA) smoothly and securely.

As described above, according to the present invention, it is possible to read the burst cutting area (BCA) and written information stably and efficiently by excluding interference by other recording layers and scattering of readout light. Thereby, it is possible to provide excellent optical disc medium and optical disc device capable of effectively achieving information management based on the optical disc medium including identification of a plurality of optical disc media, which has not been achieved conventionally.

Hereinafter, a preferred embodiment of the present invention will be explained with reference to the drawings:
Figs. 1A and 1B are illustrations of an optical disc medium showing one embodiment of the present invention, in which Fig. 1A is a schematic plan view of the optical disc medium, and Fig. 1B is an illustration showing a configuration example of the burst cutting area (BCA) shown in Fig. 1A;
Fig. 2 is a schematic partial cross-sectional view showing the relationship between a plurality of information recording layers provided in the optical disc medium shown in Fig. 1A and the BCA;
Fig. 3 is a schematic configuration diagram showing an example of an optical disc device according to the present invention;
Fig. 4 is a chart showing the relationship between adjacent layer distance of an optical disc medium and crosstalk in a conventional example;
Figs. 5A and 5B are diagrams showing a conventional example, in which Fig. 5A is an illustration showing a burst cutting area (BCA), and Fig. 5B is a schematic partial sectional view showing an example of an optical disc medium including the BCA shown in Fig. 5A;
Fig. 6 is an illustration showing a problem of a conventional example.

Here, same reference numerals are used for same components as those of the conventional example described above.

An optical disc medium 1 according to the present embodiment has basically such a configuration that a burst cutting area forming zone is provided on the inner peripheral side of the information recording area 20 accessed from a light incident surface 1A, a burst cutting area (BCA) 101 is provided in a part of the burst cutting area forming zone, and the remaining part of the burst cutting area forming zone is formed as a mirror surface 5.

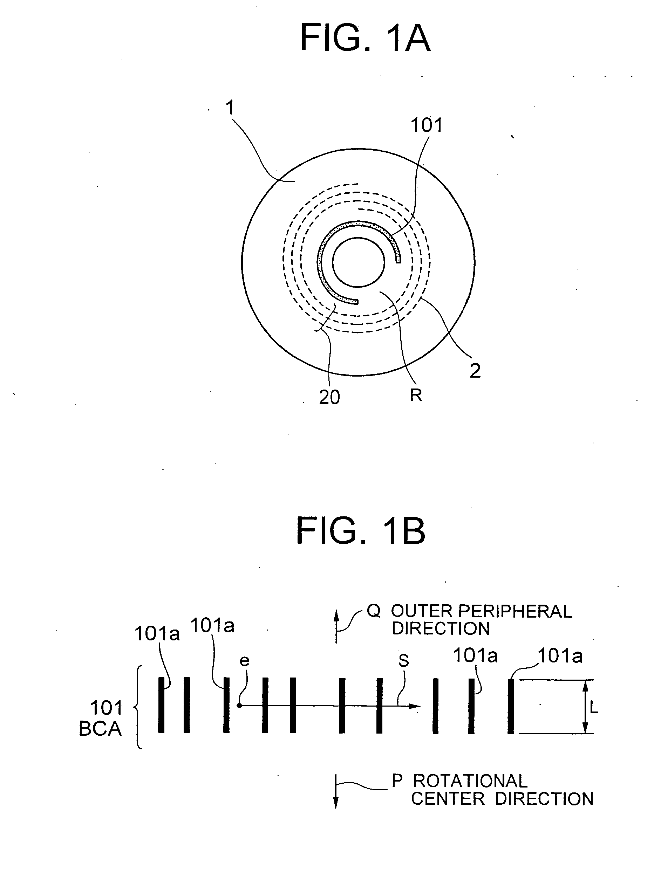

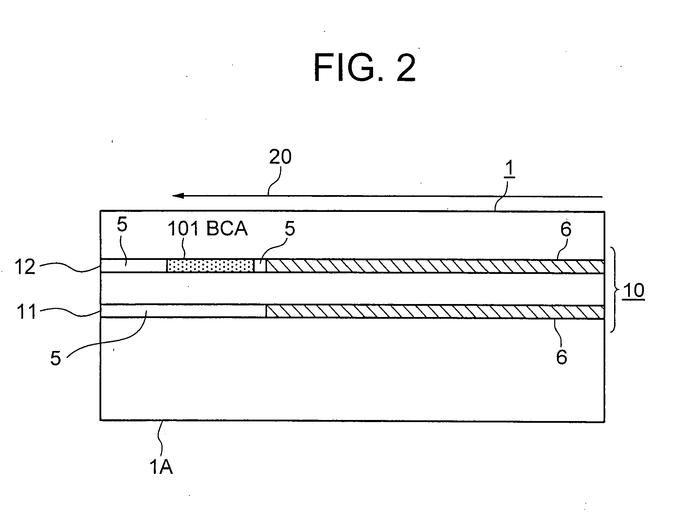

The optical disc medium 1 according to the embodiment of the present invention shown in Fig. 2 is configured such that the information recording areas 20 are arranged in multiple layers (11, 12), and the burst cutting area (BCA) 101 is provided in a part of the burst cutting area forming zone provided in one of the information recording layers, and the burst cutting area forming zones of the remaining information recording layer are formed as mirror surfaces 5. More specific explanation will be given by using Figs. 1A to 3.

In Figs. 1A to 3, the optical disc medium 1 has multi-layered information recording layers 10 (two layers in the present embodiment) accessed from the light incident surface 1A. More specifically, the optical disc medium 1 includes two layers, that is, a 0^{th} information recording layer 11 and a 1^{st} information recording layer 12, in this order from the side of the light incident surface 1A, as shown in Fig. 2. Each of the information recording layers 11 and 12 has predetermined information recording areas 20. Here, it is assumed that an area which is on the inner peripheral side of the information recording area 20 of each layer and has a predetermined same radius range is a burst cutting area 101. The burst cutting area (BCA) 101 is provided near the innermost peripheral edge in either information recording layer (e.g., the 1^{st} information recording layer 12) of the plurality of information recording layers 11 and 12 described above, and the burst cutting area forming zone in the remaining information recording layer (the 0^{th} information recording layer 11) is formed of the mirror surface 5. This will be explained in more detail.

First, Fig. 1 shows an exemplary arrangement of the burst cutting area (BCA) 101 with respect to the optical disc medium 1. The BCA 101 is formed inside the information recording area 20. The reference numeral 2 shows a record track formed on the information recording area 20. The BCA 101 of the present embodiment is formed on the inner peripheral side of the record track 2.

In the optical disc medium 1, the burst cutting area (BCA) does not have a track so it is impossible to apply track servo. Therefore, if the burst cutting area (BCA) is formed at a radius position in the middle of the record track 2, access operation between the front and back tracks becomes difficult. In this embodiment, this inconvenience is improved in advance.

The BCA 101 may be formed all over the same circumference, or may be formed on a part of the circumference as shown in Fig. 1A. Further, in the radius area in which the BCA 101 is provided (burst cutting area forming zone), track servo cannot be applied, so the width of the BCA 101 in the radial direction (length L of each line segment 101a of low reflectance constituting the BCA) is set to have a width sufficiently larger comparing with the eccentric amount of the record track 2.

Fig. 1B shows a configuration example of the BCA pattern to be formed. This BCA pattern is formed by the same means of the BCA pattern of the conventional example described above. In the BCA pattern, information signals are written by changing spaces between line segments 101a of low reflectance having almost same widths. In this method, if the line segments 101a of low reflectance are formed by laser irradiation, the line segments 101a of low reflectance can be formed by changing the irradiation position, so manufacturing becomes easy. In this case, information may be written by changing the width of a low reflectance part and the width of a high reflectance part arbitrarily.

Fig. 2 shows a partial sectional view of the optical disc medium 1. As shown in Fig. 2, the optical disc medium 1 is made of a transparent member as its material, and incorporates two information recording layers (the 0^{th} information recording layer 11 and the 1^{st} information recording layer 12) accessible from the light incident surface 1A thereof. In each of the layers, a pit recording surface 6 is provided up to the almost same inner peripheral radius. The BCA 101 is provided near the innermost peripheral edge of the information recording area 20 of the 1^{st} information recording layer 12. On the other hand, in the 0^{th} information recording layer 11, the area of the same radius position is formed as the mirror surface 5. The information recording area 20 means a range where information that the optical disc device should read exists.

In such a configuration that the BCA 101 is formed in the information recording layer 12 and the other information recording layer 11 is formed as a mirror surface without a pit or anything, no fluctuation is caused in a condensed beam passing through or being reflected at the mirror surface 5. Therefore, even in the case where the adjacent layer distance is not more than 30µm in particular, it is possible to read signals of the BCA 101 stably without being interfered by the other layer. Further, even compared with the case of forming a pit recording surface all over the 0^{th} information recording layer 11, the condensed beam to the 1^{st} information recording layer 12 will never be suffered from scattering loss by the pits of the 0^{th} information recording layer 11. Therefore, more signal light amount can be obtained from the BCA 101, so stable BCA detection is achieved.

Further, in the case of reading information from the BCA 101 by focusing on the area of the BCA 101, there is a high possibility of focusing on the mirror surface 5 of the other layer without a BCA 101 in error, since the adjacent layer distance is narrow. However, even in such a case, there is an advantage that it can be easily determined as drawing to a false information recording layer 11 from the readout signals.

In manufacturing an optical disc, if the 0^{th} information recording layer 11 and the 1^{st} information recording layer 12 are formed by sticking together, there may be a case where the pit recording surface and the BCA is overlapped, depending on the positions in the circumferential direction due to the difference in the eccentric amounts of the two layers. In such a case, if the BCA is formed to have a sufficiently large radius width compared with the eccentric amount (the length of the line segments 101a of low resistance of the BCA is set sufficiently long compared with the eccentric amount), it is possible to read signals on the BCA 101 effectively without being affected by the pit recording surface 6.

Further, it is so configured that mirror surfaces 5 are formed in all information recording layers, even in the radius area with the pit recording surface 6 formed in the area on the outer peripheral side of the BCA 101, as shown in Fig. 2. Therefore, overlapping of the pit recording surface 6 of the 0^{th} information recording layer 11 by the eccentricity between the two layers at the time of manufacturing is surely prevented, so readout stability can be further improved.

Although the BCA 101 is formed in the 1^{st} information recording layer 12 in the example of Fig. 2, it may be formed in the 0^{th} information recording layer 11, and the 1^{st} information recording layer 12 may be formed as a mirror surface. In the example of Fig. 2 in which the BCA 101 is formed in the 1^{st} information recording layer 12, the following advantage can be achieved. That is, the 0^{th} information recording layer 11 is a recording layer having a semi-transmissive characteristic for light, but the 1^{st} information recording layer 12 can be formed as a recording layer having only a reflection characteristic. Therefore, in the case of forming the BCA 101 by changing the characteristic of the recording layer by laser irradiation, the 1^{st} information recording layer 12 has larger light absorption and only a low laser irradiation power is required, so there is an advantage of easy processing.

The formation of the BCA 101 described above can be applied not only to a pit recording medium such as a ROM but also to an recordable or rewritable optical disc in which grooves are formed instead of pits. Further, even in the case where the information recording layers are formed of multiple layers more than two layers such as three layers or four layers, the effect of the present invention can be achieved by forming the BCA 101 in only one layer thereof and forming the remaining layers as mirror surfaces.

Even in the case of multiple layers as described above, it is same as the case of two layers that an information recording layer farthest from the incident surface becomes a reflection layer without any transmission. Therefore it is effective in manufacturing if the BCA 101 is formed in the farthest information recording layer.

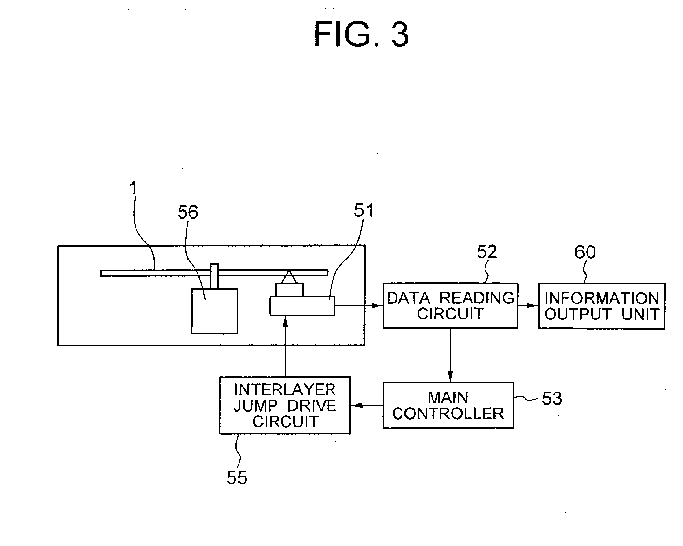

Fig. 3 shows an example of an optical disc device according to the present invention. In Fig. 3, the optical disc device includes an optical head 51, into which the optical disc medium 1 described above is loaded, for reading predetermined data from the optical disc medium 1, and a main controller 53 for controlling operation of the optical head 51, and is so configured as to read and output information from the optical head 51. Further, the main controller 53 is configured to include: a mirror surface detecting function which is operated when focusing is performed to the radius area of the burst cutting area 101 of the optical disc medium 1, and detects that the information recording layer after focusing has been performed is a mirror surface 105; and interlayer jump controlling function which is operated if the detection result is not the mirror surface 105 and instructs an interlayer jump operation to another information recording layer.

The optical disc device may be embodied as described below. That is, an optical disc device according to the present embodiment includes: the optical head 51, into which the optical disc medium 1 described above is loaded, for reading predetermined data from the optical disc medium 1; a data reading circuit 52 for reading and outputting data outputted from the optical head 51; and the main controller 53 for drive-controlling the data reading circuit 52. The optical head 51 is provided with an interlayer jump drive circuit 55 which jump-moves the condensed spot of the optical head 51 from either one of the information recording layer 11 and 12 of the optical disc medium 1 to the other information recording layer 12 or 11. The reference numeral 56 shows a spindle for rotationally driving the optical head 51, and the reference numeral 60 shows an information output unit for outputting readout data with a control by the main control unit 53.

The main control unit 53 has a recording layer determining function which is operated based on reflected light data inputted in the data reading circuit 52 and determines whether the optical head 51 selects an information recording layer with the burst cutting area (BCA) 101. Further, the main controller 53 has an interlayer jump controlling function which is operated based on a negative determination by the recording layer determining function, and causes the optical head 51 to jump from one information recording layer 11 (12) to the other information recording layer 12(11) via the interlayer jump drive circuit 55. The recording layer determining function of the main controller 53 may specifically be a mirror surface detecting function which is operated when the optical head 51 performs focusing to the radius area of the burst cutting area (BCA) 101 (see Fig. 1) corresponding to an outside instruction, and determines whether detected data by the optical head 51 is reflected data from the mirror surface 5.

In such a configuration, when the optical disc 1 having multi-layered information recording layers is set to the spindle 56, reading or writing of information is performed by the optical head 51. When the optical head 51 reads information in the burst cutting area (BCA) 101, after focusing is performed to the information recording layers 10, the data reading circuit 52 takes in signals of the reflected light, and the main controller 53 determines whether the condensing spot e of the optical head 51 correctly scans the information recording layer 12 with the BCA 101. If it is determined as the mirror surface 5, the interlayer jump drive circuit 55 is operated immediately so as to cause the optical head 51 to jump to another information recording layer to thereby try to read the BCA 101.

In this way, in the optical disc device shown in Fig. 3, it is possible to realize an operation of reading the BCA 101 more easily in the optical disc device through signal determination using reflected information from the mirror surface 5.

As described above, in the present embodiment, in forming a burst cutting area (BCA) in an area having a predetermined radial range set near the innermost peripheral edge of an information recording area, in which information thereof is read out by the optical disc device, in the optical disc medium 1 having two or more information recording layers 20 accessible from the same light incident surface 1A, the burst cutting area (BCA) 101 is formed in only one information recording layer 12, and the remaining information recording layers are formed as mirror surfaces. This optical disc medium 1 is characterized in that the burst cutting area (BCA) 101 is provided in the farthermost information recording layer 12 from the light incident surface. Further, in the optical disc medium 1 according to the present invention, mirror surfaces 5 are set in all information recording layers 11 and 12 in a predetermined radial range outside the outer peripheral edge of the burst cutting area (BCA) 101.

Therefore, identification of a position can be performed quickly without depending on track servo with high accuracy, and further, in the areas of the mirror surfaces 5, no fluctuation is caused in a condensed beam passing through or being reflected partially at the mirror surfaces 5. Therefore, no interference by the remaining (other) information recording layers 11 is caused, so it is possible to read signals in the burst cutting area (BCA) 101 stably at any time.

Further, the burst cutting area (BCA) 101 described above is set with a predetermined distance with respect to the information recording area on the outer peripheral side thereof, so interference by the information recording area becomes less. In particular, in a disc medium having a plurality of layers, even though there is eccentricity between the layers, it is possible to avoid the influence thereof, and due to this fact, it is possible to read signals of the burst cutting area (BCA) 101 stably. Further, the burst cutting area (BCA) 101 is provided in the farthest information recording layer 12 from the same light incident surface 1A of the information recording layers 11 and 12, so setting of processing of line segments having low reflectance constituting the BCA becomes easy, whereby it is possible to read BCA signals stably same as that described above.

The length of a plurality of line segments 101a of low reflectance which are constituent elements of the burst cutting area (BCA) 101 is set to be a length capable of allowing the eccentric amount of the track. Therefore, even if the burst cutting area (BCA) 101 is provided eccentrically for example, it is possible to read BCA signals in a stable state without depending on the track servo. This also leads to an improvement in the reliability of the disc medium. Further, in the embodiment described above, even if the distance between layers in the information recording layers is not more than 30µm, it is possible to detect the burst cutting area (BCA) 101 effectively by coping with the distance effectively.

Further, in the optical disc device described above, the optical disc device, which reads an optical disc medium having two or more information recording layers, includes a function of detecting that the information recording layer is a mirror surface when focusing is performed to the radius area of the burst cutting area of the optical disc medium, and a function of performing an interlayer jump operation to a predetermined information recording layer by using the detection result. Therefore, it is possible to obtain detection signals securely by means of the reflected information from the mirror surface 5, and by using them, it is possible to perform an operation of reading the burst cutting area (BCA) 101 smoothly and securely.

## Claims

1. An optical disc medium, comprising, a plurality of information recording layers accessible from a light incident surface, wherein
a burst cutting area is provided in a part of a burst cutting area forming zone provided in one of the information recording layers, and
burst cutting area forming zones of remaining information recording layers are formed as mirror surfaces.

2. The optical disc medium, as claimed in claim 1, wherein the burst cutting area is set with a predetermined distance from the information recording area located on an outer peripheral side thereof.

3. The optical disc medium, as claimed in claim 1 or 2, wherein the burst cutting area is provided in an information recording layer which is farthest from the light incident surface, among the plurality of information recording layers.

4. The optical disc medium, as claimed in claim 1, 2 or 3, wherein in the burst cutting area forming zone in which the burst cutting area is provided, all parts other than a part where the burst cutting area is provided are formed as mirror surfaces.

5. The optical disc medium, as claimed in claim 1, 2, 3 or 4, wherein information, written with a plurality of line segments of low reflectance which are constitutional elements of the burst cutting area, is set by changing spaces between the line segments of low reflectance.

6. The optical disc medium, as claimed in claim 1, 2, 3, 4 or 5, wherein a length of the plurality of line segments of low reflectance which are constitutional elements of the burst cutting area is set to a length capable of allowing an eccentric amount of a track of each information recording layer.

7. The optical disc medium, as claimed in claim 2, 3, 4, 5 or 6, wherein a distance between the information recording layers is not more than 30µm.

8. An optical disc device, comprising: an optical head for reading predetermined data from an optical disc medium; and a main controller for controlling operation of the optical head, which is configured to read and output information from the optical head, wherein
in the optical disc medium comprising a plurality of information recording layers accessible from a light incident surface, a burst cutting area is provided in a part of a burst cutting area forming zone provided in one of the information recording layers, and a remaining part of the burst cutting area forming zone in the information recording layer is formed as a mirror surface, and
the main controller includes: a mirror surface detecting function which is operated when focusing is performed to a radial area of the burst cutting area of the optical disc medium or when movement to the burst cutting area is performed after focusing has been performed to another area of the information recording layer, and which detects that the information recording layer after focusing has been performed is a mirror surface; and an interlayer jump controlling function which is operated when a detection result is not a mirror surface and which instructs an interlayer jump operation to another information recording layer.

9. An optical disc device comprising: an optical head for reading predetermined data from an optical disc medium; a data reading circuit for reading and outputting data outputted from the optical head; and a main controller for drive-controlling the data reading circuit, wherein
in the optical disc medium comprising a plurality of information recording layers accessible from a light incident surface, a burst cutting area is provided in a part of a burst cutting area forming zone provided in one of the information recording layers, and a remaining part of the burst cutting area forming zone in the information recording layer is formed as a mirror surface,
the optical head has an interlayer jump drive circuit for jump-moving a condensing spot of the optical head from one information recording layer of the optical disc medium to another information recording layer, and
the main controller includes: a recording layer determining function which is operated based on reflected light data inputted into the data reading circuit and which determines whether the optical head selects an information recording layer having a burst cutting area; and an interlayer jump controlling function which is operated based on a negative determination by the recording layer determining function and which causes the optical head to jump to another recording layer via the interlayer jump driving circuit.

10. The optical disc device, as claimed in claim 9, wherein the recording layer determining function of the main controller is a mirror surface detecting function which is operated when focusing is performed to a radial area of the burst cutting area corresponding to an outside instruction of the optical head or when movement to the burst cutting area is performed after focusing has been performed to another area of the information recording layer, and which determines whether detected data from the optical head is reflected data from the mirror surface.
